# EUROPEAN PATENT APPLICATION

(11) **EP 2 793 295 A2**
(43) Date of publication of application: **22.10.2014**
(21) Application number: 13199140.8
(22) Date of filing: 20.12.2013
(51) Int. Cl.: H01M 2/26, H01M 2/30, H01M 2/34, H01M 10/04, H01M 10/058

(54) **Rechargeable battery**

(30) Priority: 19.04.2013 KR 20130043754
(71) Applicant: Samsung SDI Co., Ltd., Yongin-si, Gyeonggi-do (KR)
(72) Inventor: Han, Min-Yeol, Gyeonggi-do (KR)
(74) Representative: Mounteney, Simon James

(57) **Abstract**

A rechargeable battery having an electrode assembly including a first electrode, and a second electrode, a case receiving the electrode assembly, a cap plate coupled with the case, a first electrode terminal electrically connected with the first electrode, and a cap connection member connecting the first electrode terminal and the cap plate and having a connection fuse portion formed therein.

## Description

### BACKGROUND

### 1. Field

The present invention relates generally to a rechargeable battery. More particularly, the invention relates generally to a rechargeable battery having a fuse.

### 2. Description of the Related Art

A rechargeable battery can be repeatedly charged and discharged unlike a primary battery that is incapable of being recharged. A rechargeable battery of a low capacity is used for a small portable electronic device such as a mobile phone, a laptop computer, and a camcorder, and a large capacity battery is widely used as a power source for driving a motor of a hybrid vehicle, etc.

Nowadays, a high power rechargeable battery using a non-aqueous electrolyte of a high energy density has been developed, and the high power rechargeable battery is formed as a large capacity rechargeable battery by coupling in series a plurality of rechargeable batteries to use for driving a motor of a device, for example, an electric vehicle requiring large electric power.

Such a rechargeable battery may be formed in a cylindrical shape, a prismatic shape, or a pouch shape. In the rechargeable battery, a positive electrode includes a positive current collector, and a positive active material-based layer formed on the positive current collector, and a negative electrode includes a negative current collector, and a negative active material-based layer formed on the negative current collector.

When the case is positively or negatively charged, a fuse is operated, and thus the case maintains the charged state even though a current is blocked. When the case is maintained in the charged stage, the rechargeable battery is continuously maintained in an unstable condition, thereby causing incomplete elimination of unstable factors.

The above information disclosed in this Background section is only for enhancement of understanding of the background of the described technology and therefore it may contain information that does not form the prior art that is already known in this country to a person of ordinary skill in the art.

### SUMMARY

The present invention sets out to provide a rechargeable battery having improved safety.

A rechargeable battery according to one aspect of the present invention includes an electrode assembly including a first electrode and a second electrode, a case receiving the electrode assembly, a cap plate coupled with the case, a first electrode terminal electrically connected with the first electrode, and a cap connection member connecting the first electrode terminal and the cap plate and having a connection fuse portion formed therein.

The cap connection member may include a terminal connection plate contacting the first electrode terminal by being coupled thereto and a cap connection plate bonded to the cap plate, and the connection fuse portion may be disposed between the terminal connection plate and the cap connection plate.

The terminal connection plate may be disposed in a lower portion of the first electrode terminal, and an upper insulation member may be provided between the terminal connection plate and the cap plate for insulation between the cap plate and the terminal connection plate.

The cap connection member and the first electrode terminal may be integrally formed, the cap connection member may protrude from an end of the first electrode terminal, the cap connection plate may be disposed lower than the terminal connection plate and the connection fuse portion, and a protrusion extending upwardly may be formed at one end of the cap connection plate for connection with the connection fuse portion.

The connection fuse portion may have a cross-section that is smaller than other portions of the cap connection member, and fuse grooves recessed to the inside may be formed at lateral sides of the connection fuse portion. In addition, a plurality of fuse holes may be formed in the connection fuse portion.

In the cap plate, a second electrode terminal electrically connected with the second electrode may be provided in the cap plate, the first electrode terminal and the first electrode may be electrically connected with each other through a first current collecting member, the second electrode terminal and the second electrode may be electrically connected with each other through a second current collecting member, and a current collecting fuse portion may have a cross-sectional area that is smaller than other portions of the current collecting members and is formed in at least one of the first current collecting member and the second current collecting member.

An operation current that causes melting of the current collecting fuse portion may be smaller than an operation current that causes melting of the connection fuse portion, a short-circuit tab may be provided in the second electrode terminal, and a short-circuit member is electrically connected with the short-circuit tab by being deformed according to a pressure change that may be provided in the cap plate.

A fuse cover may be provided in an upper portion of the cap connection member, and an opening may be formed in the fuse cover so that the first electrode terminal is inserted and then protrudes upwardly through the opening.

The cap connection member may be disposed in a lower portion of the first electrode terminal, an upper insulation member may be provided between the first electrode terminal and the cap plate for insulation between the cap plate and the cap connection member, and a first groove to which the upper insulation member is inserted may be formed in the fuse cover.

A second groove to which the connection fuse portion is inserted may be formed in the fuse cover, and a support protrusion coupled to the fuse groove in a fitted manner may be formed in the second groove.

The cap connection member may include a terminal connection plate contacting the first electrode terminal by being coupled therewith and a cap connection plate bonded to the cap plate, a third groove to which the cap connection plate is inserted may be formed in the fuse cover, and a heat insulation member that surrounds the connection fuse portion may be provided in the cap connection member. Further, the heat insulation member may be formed by insert-molding.

According to an aspect of the present invention, when a fuse is operated in a rechargeable battery, an external fuse is operated together to prevent a case from being electrically connected with a positive electrode or a negative electrode so that unstable factors can be eliminated, thereby improving safety.

At least some of the above and other features of the invention are set out in the claims.

### BRIEF DESCRIPTION OF THE DRAWINGS

FIG. 1 is a perspective view of a rechargeable battery according to an embodiment of the present invention.
FIG. 2 is a cross-sectional view of FIG. 1, taken along the line II-II.
FIG. 3 is a partial perspective view of a current collecting member according to the an embodiment of the present invention.
FIG. 4 is a partial perspective view of another current collecting member according to the embodiment of the present invention.
FIG. 5 is a perspective view of a cap connection member according to an embodiment of the present invention.
FIG. 6 is a perspective view of a cap connection member according to another embodiment of the present invention.
FIG. 7 is a partial cross-sectional view of a rechargeable battery according to an embodiment of the present invention.
FIG. 8 is a perspective view of another cap connection member according to the an embodiment of the present invention.
FIG. 9 is a perspective view of a part of a rechargeable battery according to an embodiment of the present invention.
FIG. 10 is a partial cross-sectional view of the rechargeable battery according to an embodiment of the present invention.
FIG. 11 is a perspective view of a fuse cover according to an embodiment of the present invention, viewed from the bottom of the fuse cover.
FIG. 12 is a perspective view of another cap connection member according to an embodiment of the present invention.
FIG. 13 is a partial cross-sectional view of a rechargeable battery according to an embodiment of the present invention.

### DETAILED DESCRIPTION

In the following detailed description, only certain embodiments of the present invention have been shown and described, simply by way of illustration. As those skilled in the art would realize, the described embodiments may be modified in various different ways, all without departing from the scope of the present invention. Like reference numerals designate like elements throughout the specification.

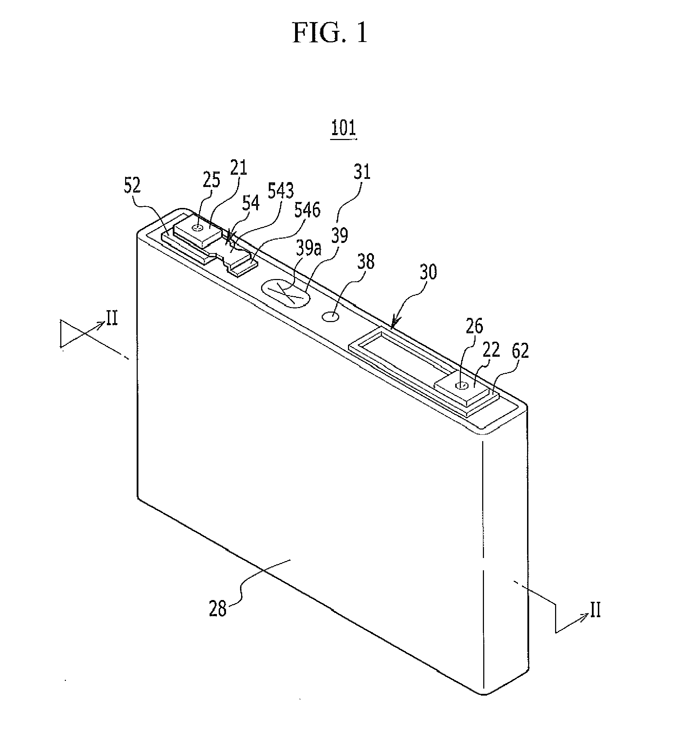

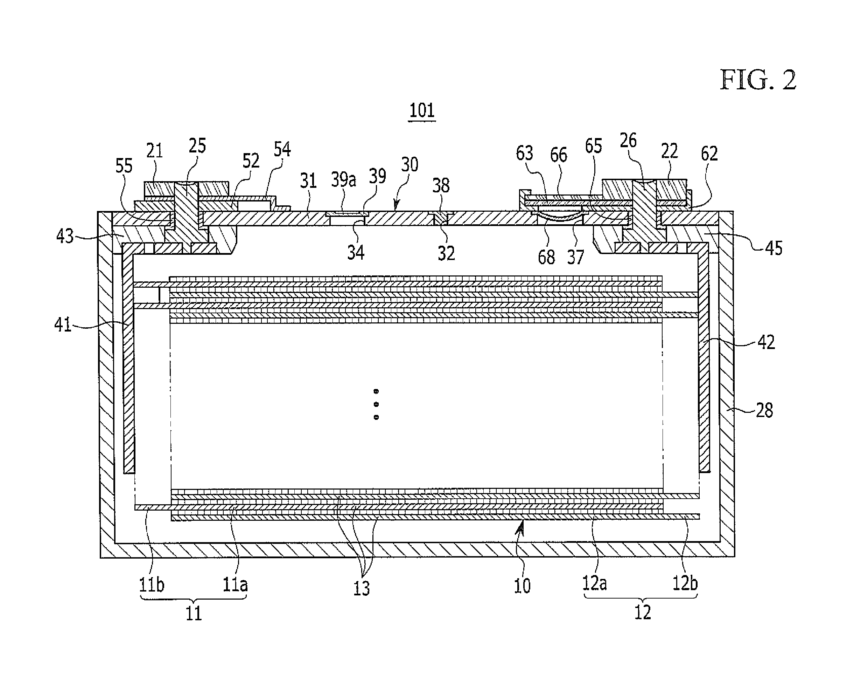

FIG. 1 is a perspective view of a rechargeable battery 101 according to an embodiment of the present invention, and FIG. 2 is a cross-sectional view of FIG. 1, taken along the line II-II.

Referring to FIG. 1 and FIG. 2, the rechargeable battery 101 includes an electrode assembly 10 formed by spirally winding a positive electrode 11 and a negative electrode 12 and interposing a separator 13 therebetween. A case 28 houses the electrode assembly 10, and a cap assembly 30 is coupled to an opening of the case 28.

The rechargeable battery 101 is illustrated as a lithium ion rechargeable battery formed in the shape of a prism. However, the present invention is not limited thereto, and the present invention may be applied to various types of batteries including a lithium polymer battery or a cylindrical battery.

The electrode assembly 10 is formed by disposing a first electrode (hereinafter, referred to as a positive electrode) 11 and a second electrode (hereinafter, referred to as a negative electrode) 12 on either side of a separator 13, which is provided as an insulator, and spirally winding the positive electrode 11, the separator 13, and the negative electrode 12 in a jelly roll shape.

The positive electrode 11 and the negative electrode 12 respectively include coated portions 11a and 12a in which an active material is applied to a current collector of a metal plate, and uncoated portions 11 b and 12b which are formed as exposed current collectors because an active material is not applied thereto.

The uncoated portion 11b of the negative electrode 11 is formed at one end of the negative electrode 11 along the wound negative electrode 11. The uncoated portion 12b of the positive electrode 12 is formed at one end of the positive electrode 12 along the wound positive electrode 12. Further, the uncoated portions 11 b and 12b are disposed at opposite ends of the electrode assembly 10.

However, the present invention is not limited thereto, and the electrode assembly 10 may have a structure in which a positive electrode and a negative electrode, formed of a plurality of sheets are layered, interposing a separator therebetween.

The case 28 is substantially formed in the shape of a cuboid, and includes an opening formed in one side thereof. The case 28 may be made of a metal such as aluminum, stainless steel, and the like.

The cap assembly 30 includes a cap plate 31 covering the opening of the case 28, a first electrode terminal (i.e., a positive terminal) 21 protruding to the outside of the cap plate 31 and electrically connected with the positive electrode 11, and a second electrode terminal (i.e., a negative terminal) 22 protruding to the outside of the cap plate 31 and electrically connected with the negative electrode 12.

The cap plate 31 is formed in the shape of a square plate extending in one direction, and is coupled to the opening of the case 28. The cap plate 31 is made of a metal such as aluminum. A sealing cap 38 is located in an electrolyte injection opening 32, and a vent member 39 having a notch 39a which is formed to be ruptured at a predetermined pressure, are provided in the cap plate 31.

The first electrode terminal 21 and the second electrode terminal 22 protrude upwardly from the cap plate 31. The first electrode terminal 21 is electrically connected to the positive electrode 11 through a first current collecting member 41, and the second electrode terminal 22 is electrically connected to the negative electrode 12 through a second current collecting member 42.

A terminal connection member 25 that electrically connects the first electrode terminal 21 and the first current collecting member 41 is provided between the first electrode terminal 21 and the first current collecting member 41. The terminal connection member 25 is inserted into a hole formed in the first electrode terminal 21 and an upper end thereof is fixed to the first electrode terminal 21 by welding, and the lower end thereof is fixed to the first current collecting member 41 by welding.

A gasket 55 is inserted through a hole through which the terminal connection member 25 extends for sealing between the terminal connection member 25 and the cap plate 31, and a lower insulation member 43 through which the terminal connection member 25 is inserted, is positioned in a lower portion of the cap plate 31.

An upper insulation member 52, that electrically insulates the first electrode terminal 21 from the cap plate 31, is provided in an upper portion of the first electrode terminal 21. The terminal connection member 25 is fitted to the upper insulation member 52. In addition, a cap connection member 54, that electrically connects the first electrode terminal 21 and the cap plate 31, is provided between the first electrode terminal 21 and the upper insulation member 52. The terminal connection member 25 extends through the upper insulation member 52, the cap connection member 54 and the first electrode terminal 21.

A terminal connection member 26, that electrically connects the second electrode terminal 22 and the second current collecting member 42, is provided between the second electrode terminal 22 and the second current collecting member 42. The terminal connection member 26 is inserted through a hole formed in the second electrode terminal 22 and thus an upper end thereof is fixed to the second electrode terminal 22 by welding, and a lower end thereof is fixed to the second current collecting member 42 by welding.

For sealing between the second electrode terminal 22 and the cap plate 31, a gasket 65 is inserted into a hole through which the terminal connection member 26 extends, and a lower insulation member 45 is provided in a lower portion of the cap plate 31 for insulation of the second electrode terminal 22 and the second current collecting member 42 in the cap plate 31.

A short-circuit tab 63 electrically connected to the second electrode terminal 22, is provided on the cap plate 31. A short-circuit insulation member 62 is provided between the short-circuit tab 63 and the cap plate 31 for electrical insulation therebetween. The short-circuit tab 63 is disposed between the short-circuit insulation member 62 and the second electrode terminal 22, and the terminal connection member 26 extends through the short-circuit insulation member 62, the short-circuit tab 63, and the second electrode terminal 22. A terminal cover 66 is provided in an upper portion of the short-circuit tab 63, and the terminal cover 66 is formed of an insulting polymer and prevents exposure of the short-circuit tab 63. The short-circuit insulation member 62 includes a rib protruding from a side end of the terminal to surround the short-circuit tab and the side end of the terminal.

The cap assembly 30 includes a short-circuit member 68 that short-circuits the positive electrode 11 and the negative electrode 12. The short-circuit member 68 is electrically connected with the cap plate 31 that is electrically connected with the positive electrode 11, and is connected with the short-circuit tab 63, which is electrically connected with the negative electrode 12, by being deformed when an internal pressure of the rechargeable battery 101 is increased.

A short-circuit hole 37 is formed in the cap plate 31, and the short-circuit member 68 is disposed between the short-circuit insulation member 62 and the cap plate 31 in the short-circuit hole 37. A short-circuit groove is formed in an upper end of the short-circuit hole 37, and the short-circuit member 68 is partially inserted into the short-circuit groove.

The short-circuit member 68 is formed in the shape of a circular plate, and includes a connection portion formed in the shape of a plate and a support portion formed in the external side of the connection portion. The connection portion includes an arc-shaped cross-section convexly protruding toward the short-circuit tab 53.

Accordingly, when the internal pressure of the rechargeable battery 101 is increased, the short-circuit member 68 is deformed such that the positive electrode 11 and the negative electrode 12 are electrically connected, thereby promptly discharging a charged current.

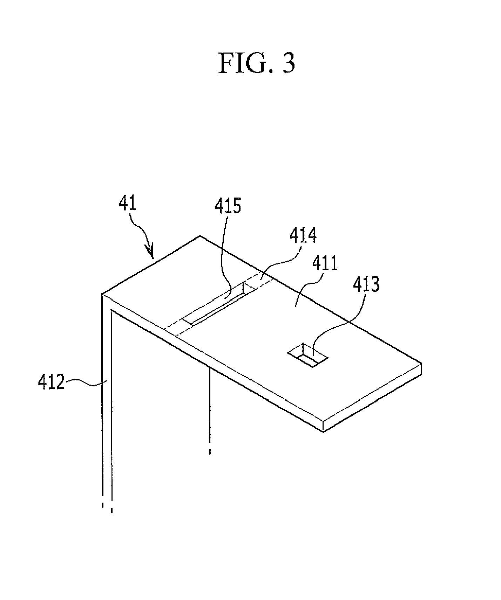

FIG. 3 is a partial perspective view of the first current collecting member according to an embodiment of the present invention.

The first current collecting member 41 includes a terminal bonding portion 411 attached to the first electrode terminal 21 by welding and an electrode bonding portion 412 bent from the terminal bonding portion 411 and attached to the positive electrode 11 by welding. A support hole 413, to which a lower end of the terminal connection member 25 is connected, is formed in the terminal bonding portion 411, and therefore the terminal connection member 25 and the first current collecting member 41 are bonded to each other by welding. In addition, a current collecting fuse portion 414 is formed in the first current collecting member 41. The current collecting fuse portion 414 has a smaller cross-sectional area than the surrounding portion and thus is able to be deformed when an over-current condition flows.

A fuse hole 415 is formed in the current collecting fuse portion 414 and the fuse hole 415 has a much smaller cross-sectional area than the surrounding portion. Thus, when an over-current condition exceeding a limiting current flows, the current collecting fuse portion 414 is melted to disconnect the electrical connection between the electrode assembly 10 and the second electrode terminal 22.

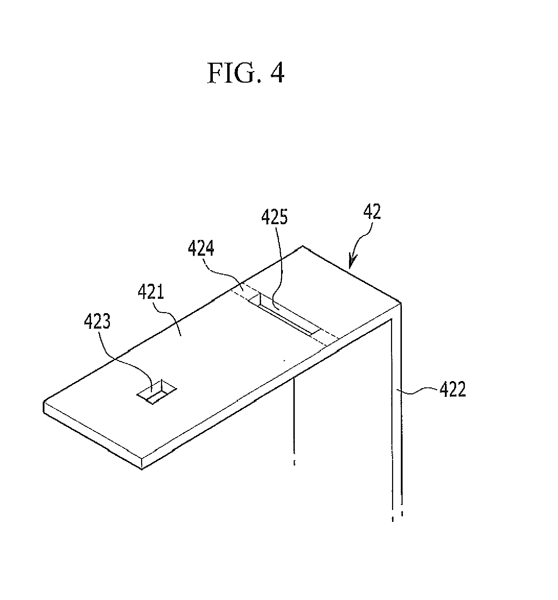

FIG. 4 is a partial perspective view of the second current collecting member of this embodiment of the present invention.

As shown in FIG. 4, the second current collecting member 42 includes a terminal bonding portion 421 attached to the second electrode terminal 22 by welding and an electrode bonding portion 422 bent from the terminal bonding portion 421 and attached to the negative electrode 12 by welding. A support hole 423, to which a lower end of the terminal connection member 26 is inserted, is provided in the terminal bonding portion 421, and the terminal connection member 26 and the second current collecting member 42 are bonded to each other by welding. In addition, the second current collecting member 42 includes a current collecting fuse portion 424. The current collecting fuse portion 424 has a smaller cross-sectional area than the surrounding portion, and thus, when an over-current condition flows, the current collecting fuse portion 424 is deformed.

A fuse hole 425 is formed in the current collecting fuse portion 424. The fuse hole 425 has a much smaller cross-sectional area than the surrounding portion, and thus when an over-current condition that exceeds a limiting current flows, the current collecting fuse portion 424 is melted to disconnect the electrical connection between the electrode assembly 10 and the second electrode terminal 22.

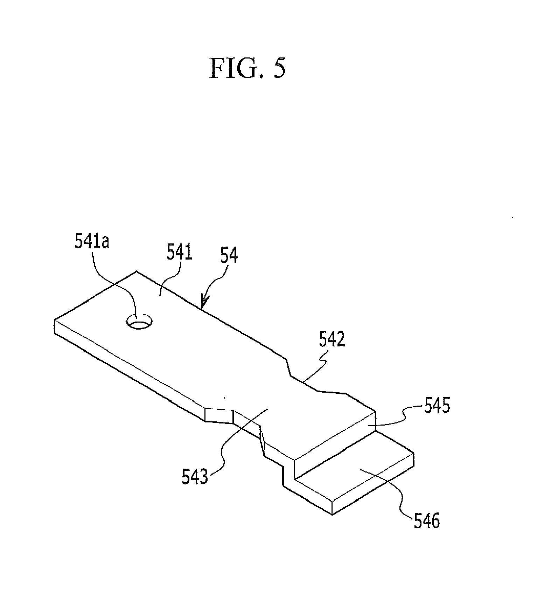

FIG. 5 is a perspective view of the cap connection member 54 according to this embodiment of the present invention.

Referring to FIG. 5, the cap connection member 54 includes a terminal connection plate 541 contacting the first electrode terminal 21 by being coupled thereto, a cap connection plate 546 bonded to the cap plate 31, and a connection fuse portion 543 formed between the cap connection plate 546 and the terminal connection plate 541.

The terminal connection plate 541 contacts the first electrode terminal 21 by being disposed in a lower portion of the first electrode terminal 21. The terminal connection plate 541 is formed in the shape of a long quadrangle plate, and a hole 541 a, to which the terminal connection member 25 is inserted, is formed in the terminal connection member 25. The cap connection plate 546 meets an upper surface of the cap plate 31 and is fixed to the cap plate 31 by welding. The cap connection plate 546 is disposed lower than the terminal connection plate 541 and the connection fuse portion 543, by a protrusion 545 extending between one end of the cap connection plate 546 and the connection fuse portion 543.

A cross-sectional area of the connection fuse portion 543 is formed to be smaller than surrounding portions of the cap connection member 54, by having fuse grooves 542 which are inwardly recessed along lateral sides of the connection fuse portion 543. Accordingly, when an over-current condition occurs, the connection fuse portion 543 is melted to disconnect the electrical connection between the first electrode terminal 21 and the cap plate 31. When the overcurrent condition occurs, the cap plate 31 and the case 28 become neutral so that they do not have electrical characteristics.

Here, an operational current that causes the connection fuse portion 543 to be melted is set to be higher than an operation current that causes melting of current collecting fuse portions 414 and 424. Accordingly, when the current collecting fuse portions 414 and 424 are melted, the connection fuse portion 543 is melted after a predetermined time lapse.

When an overcurrent condition flows to the rechargeable battery 101, and thus the current collecting fuse portions 414 and 424 are melted, an arc and a gas are generated so that the internal pressure of the rechargeable battery 101 is increased. Accordingly, the short-circuit member 68 contacts the short-circuit tab 63 while being deformed, thereby inducing an external short-circuit. When the external short-circuit is induced, a discharge occurs due to contact between the short-circuit member 68 and the short-circuit tab 63, but the external short-circuit is continued, thereby maintaining an unstable condition.

Although the current collecting fuse portions 414 and 424 provided in the rechargeable battery 101 are melted, if the rechargeable batteries are connected with each other by a bus bar, a current continuously flows to the first electrode terminal 21 and the second electrode terminal 22. In this case, since the short-circuit member 68 and the short-circuit tab 63 are in contact, the external short-circuit is continued, thereby causing a fire and an explosion due to melting of the short-circuit member 68 and the generation of an arc.

However, in the present embodiment, the connection fuse portion 543 is formed and melted when the overcurrent condition flows so that the connection between the cap plate 31 and the first electrode terminal 21 can be disconnected. Accordingly, the external short-circuit state can be released and thus unstable factors can be eliminated, thereby improving safety of the rechargeable battery 101.

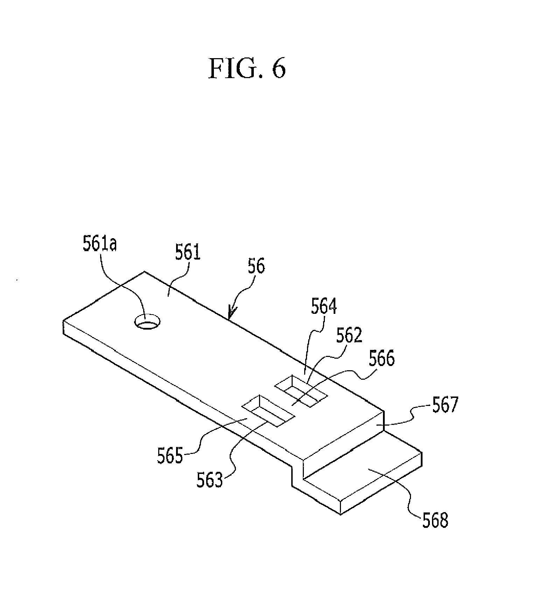

FIG. 6 is a perspective view of a cap connection member 56 according to another embodiment of the present invention.

The cap connection member 56 includes a terminal connection plate 561 disposed in a lower portion of a first electrode terminal 21, a cap connection plate 568 bonded to the cap plate 31, and connection fuse portions 564, 565, and 566 formed between the cap connection plate 568 and the terminal connection plate 561.

The terminal connection plate 561 is formed in the shape of a long quadrangle, and a hole 561 a to which a terminal connection member 25 is inserted is formed in the terminal connection plate 561. The cap connection plate 568 meets an upper surface of the cap plate 31 and is fixed to the cap plate 31 by welding. The cap connection plate 568 is disposed lower than the terminal connection plate 561 and the connection fuse portions 564, 565, and 566, and a protrusion 567 extending upward is formed at one side end of the cap connection plate 568 for connection with the connection fuse portions 564, 565, and 566.

The connection fuse portions 564, 565, and 566 have smaller cross-sectional areas compared to surrounding portions, and the connection fuse portions 564, 565, and 566 are spaced apart from each other along a width of the cap connection member 56, separated by fuse holes 562 and 563. The two fuse holes 562 and 563 are formed in the cap connection member 56. The connection fuse portion 564 is formed beside fuse hole 562, the connection fuse portion 565 is formed beside fuse hole 563, and the connection fuse portion 566 is formed between fuse holes 562 and 563.

Accordingly, when an overcurrent condition flows, the connection fuse portions 564, 565, and 566 are melted to disconnect electrical connection between the first electrode terminal 21 and the cap plate 31.

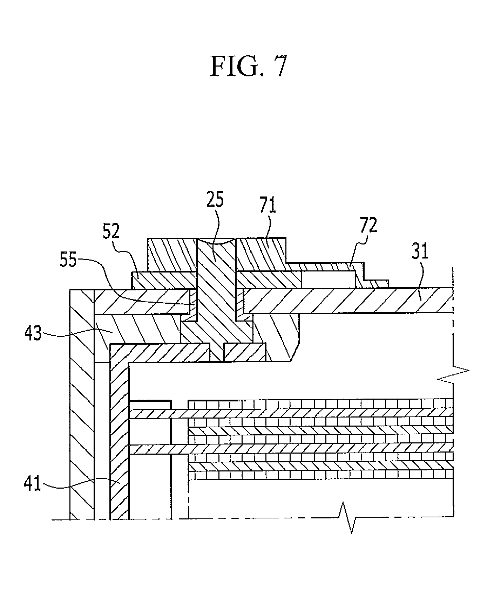

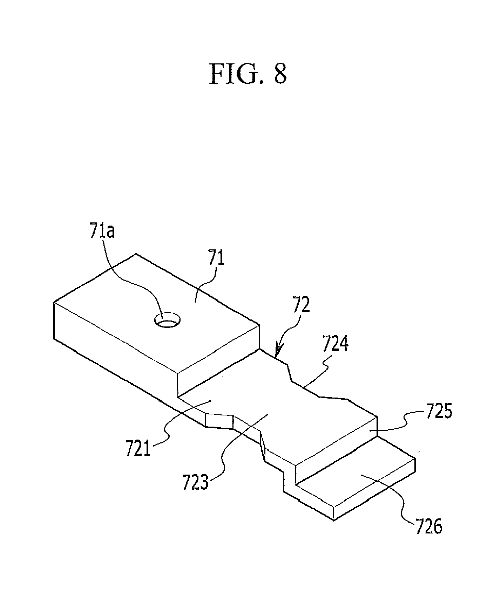

FIG. 7 is a partial cross-sectional view of a rechargeable battery according to another embodiment of the present invention and FIG. 8 is a perspective view of a cap connection member 72 according to this embodiment of the present invention.

Referring to FIG. 7 and FIG. 8, a rechargeable battery according to the present embodiment is the same as the rechargeable battery of the prior embodiment, and therefore a description for the same structure will be omitted.

A hole to which a terminal connection member 25 is inserted is formed in the first electrode terminal 71, and the cap connection member 72 is formed extending from a side end of the first electrode terminal 71. That is, the cap connection member 72 according to the present embodiment is integrally formed with the first electrode terminal 71.

The cap connection member 72 includes a terminal connection plate 721 protruding from a side end of the first electrode terminal 71, a cap connection plate 726 bonded to the cap plate 31, and a connection fuse portion 723 formed between the cap connection plate 726 and the terminal connection plate 721.

The cap connection plate 726 meets the cap plate 31 and is fixed to the cap plate 31 by welding. The cap connection plate 726 is disposed lower than the terminal connection plate 721 and the connection fuse portion 723, and a protrusion 725 extending upwardly is formed in one side end of the cap connection plate 726 for connection with the connection fuse portion 723.

The connection fuse portion 723 has a cross-sectional area that is smaller than surrounding portions by fuse grooves 724 formed along lateral sides of the connection fuse portion 723. Accordingly, when an overcurrent condition flows, the connection fuse portion 723 is melted to disconnect an electrical connection between the first electrode terminal 71 and the cap plate 31.

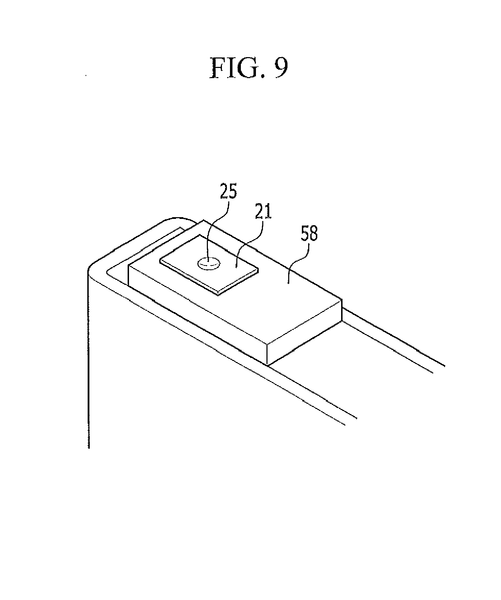

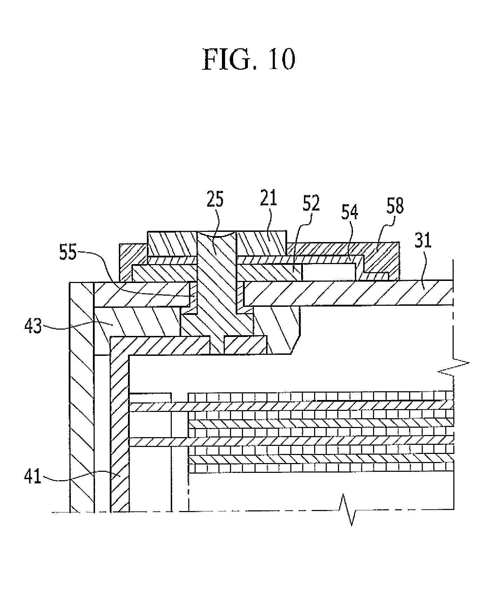

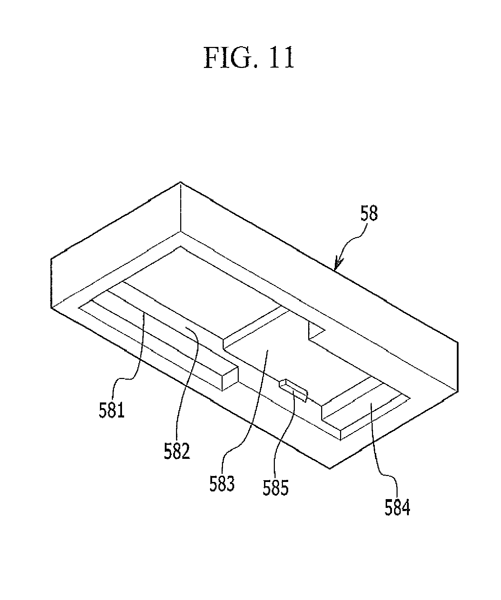

FIG. 9 is a partial perspective view of a rechargeable battery according to another embodiment of the present invention. FIG. 10 is a partial cross-sectional view of the rechargeable battery according to this embodiment of the present invention, and FIG. 11 is a perspective view of a fuse cover according to this embodiment of the present invention, viewed from the bottom of the fuse cover.

Referring to FIG. 9 to FIG. 11, the rechargeable battery according to the present exemplary is the same as the rechargeable battery of the previous embodiments, excluding that a fuse cover 58 is provided, and therefore a description for the same structure will be omitted.

The fuse cover 58 is provided on the cap connection member 54 to insulate the cap connection member 54 and blocks dissipation of heat generated from the cap connection member 54. An opening 582 and a first groove 581 are formed in the fuse cover 58. The opening 582 is positioned such that the first electrode terminal inserted into the fuse cover 58 can extend upwardly therethrough, and the first groove 581 is formed below the opening 582 so that an upper insulation member 52 can be inserted into the first groove 581. Further, a second groove 583 and a third groove 584 are formed in the fuse cover 58. The second groove 583 extends to an end of the opening 581 and the connection fuse portion (543, shown in FIG. 5) is inserted therein. The cap connection plate 546 is inserted into the third groove 584.

A support protrusion 585, which could fit into a fuse groove 542, is formed on the second groove 583. The support protrusion 585 supports the connection fuse portion 543 to prevent the connection fuse portion 543 from moving. In addition, when the connection fuse portion 543 is melted, the support protrusion 585 prevents recontact due to movement of a melted portion. The first groove 581, the second groove 582, and the third groove 584 are concave upward from a lower portion of the fuse cover 58.

As described above, when the fuse cover 58 is formed, dissipation of heat generated from the connection fuse portion 543 can be prevented, thereby preventing delay of operation of the connection fuse portion 543, and arc and welding residues generated from melting of the connection fuse portion 543 can be prevented from being discharged to the outside.

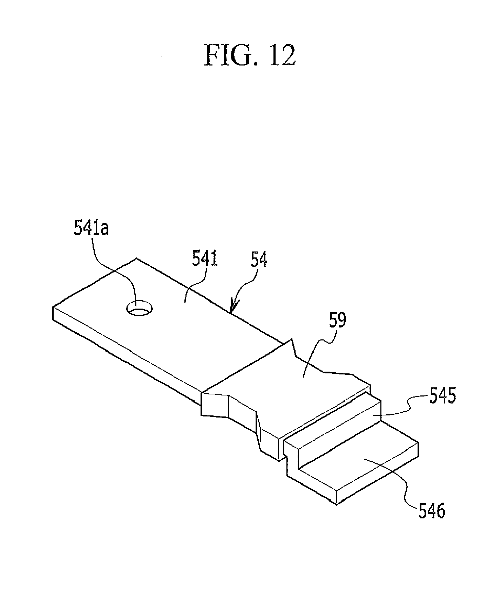

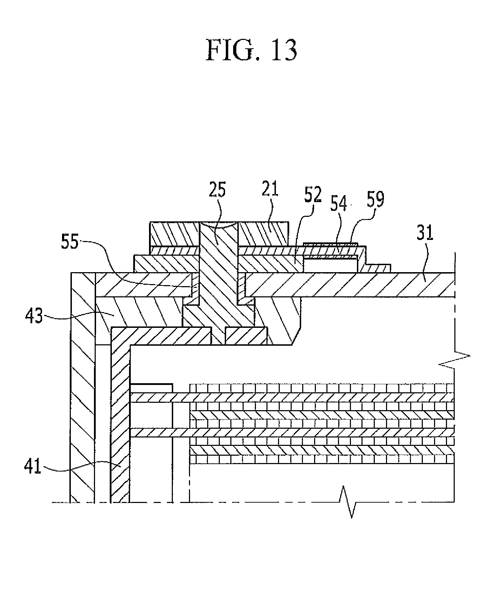

FIG. 12 is a perspective view of a cap connection member according to another embodiment of the present invention and FIG. 13 is a partial cross-sectional view of the rechargeable battery according to this embodiment of the present invention.

Referring to FIG. 12 to FIG. 13, a rechargeable battery according to the present embodiment is the same as the rechargeable battery of previous embodiments, excluding a heat insulation member, and therefore a description for the same structure will be omitted.

A heat insulation member 59 is provided on a cap connection member 54 to insulate the cap connection member 54 and block dissipation of heat generated from the cap connection member 54. The heat insulation member 59 surrounds a connection fuse portion (543, shown in FIG. 5). The heat insulation member 59 may be formed by an insert molding, or may be formed by coating a film or a heat insulation material to the connection fuse portion 543. The heat insulation member 59 can be made of a polymer material having low heat conductivity, however the material is not particularly limited.

When an overcurrent condition flows with low intensity, heat is continuously generated rather than being suddenly and intensely generated. Accordingly, temperature of the connection fuse portion 543 is gradually increased and thus when the heat generation speed equals the heat dissipation speed, the connection fuse portion 543 cannot be operated and maintained in a high-temperature state. However, when the heat insulation member 59 is provided as in the present exemplary embodiment, heat dissipation can be reduced so that the connection fuse portion 543 can be easily melted by a predetermined current.

While this disclosure has been described in connection with what is presently considered to be practical embodiments, it is to be understood that the invention is not limited to the disclosed embodiments, but, on the contrary, is intended to cover various modifications and equivalent arrangements included within the scope of the appended claims.

## Claims

1. A rechargeable battery comprising:
an electrode assembly including a first electrode and a second electrode;
a case receiving the electrode assembly;
a cap plate coupled with the case;
a first electrode terminal electrically connected with the first electrode; and
a cap connection member connecting the first electrode terminal and the cap plate and having a connection fuse portion formed therein.

2. A rechargeable battery according to claim 1, wherein the cap connection member comprises a terminal connection plate contacting the first electrode terminal by being coupled thereto and a cap connection plate bonded to the cap plate, and the connection fuse portion is disposed between the terminal connection plate and the cap connection plate.

3. A rechargeable battery according to claim 2, wherein the terminal connection plate is disposed in a lower portion of the first electrode terminal, and an upper insulation member is provided between the terminal connection plate and the cap plate for insulation between the cap plate and the terminal connection plate.

4. A rechargeable battery according to claim 1, wherein the cap connection member and the first electrode terminal are integrally formed, and the cap connection member protrudes from a side of the first electrode terminal.

5. A rechargeable battery according to claim 2 or 3, wherein the cap connection plate is disposed lower than the terminal connection plate and the connection fuse portion, and a protrusion extending upwardly is formed at an end of the cap connection plate for connection with the connection fuse portion.

6. A rechargeable battery according to any preceding claim, wherein the connection fuse portion has a cross-sectional area that is smaller than a cross-sectional area of the cap connection member, and has fuse grooves recessed along lateral sides of the connection fuse portion.

7. A rechargeable battery according to any preceding claim, wherein a plurality of fuse holes are formed in the connection fuse portion.

8. A rechargeable battery according to any preceding claim, wherein, in the cap plate, a second electrode terminal electrically connected with the second electrode is provided in the cap plate, the first electrode terminal and the first electrode are electrically connected with each other through a first current collecting member, the second electrode terminal and the second electrode are electrically connected with each other through a second current collecting member, and a current collecting fuse portion has a cross-sectional area that is smaller than a cross-sectional area of the first current collecting member or the second current collecting member and is formed on at least one of the first current collecting member or the second current collecting member.

9. A rechargeable battery according to claim 8, wherein the current collecting fuse portion and the connection fuse portion are configured such that an operation current that causes melting of the current collecting fuse portion is smaller than an operation current that causes melting of the connection fuse portion.

10. A rechargeable battery according to claim 8 or 9, wherein a short-circuit tab is positioned in the second electrode terminal, and a short-circuit member is electrically connected with the short-circuit tab by being deformed according to a pressure change in the cap plate.

11. A rechargeable battery according to any preceding claim, wherein a fuse cover is positioned in an upper portion of the cap connection member, and an opening is formed in the fuse cover so that the first electrode terminal extends upwardly through the opening.

12. A rechargeable battery according to claim 11, wherein the cap connection member is positioned in a lower portion of the first electrode terminal, an upper insulation member is positioned between the first electrode terminal and the cap plate for insulation between the cap plate and the cap connection member, and a first groove to which the upper insulation member is inserted is formed in the fuse cover.

13. A rechargeable battery according to claim 11 or 12, wherein a second groove to which the connection fuse portion is inserted is formed in the fuse cover, and a support protrusion coupled to the fuse groove in a fitted manner is formed in the second groove.

14. A rechargeable battery according to claim 13, wherein the cap connection member comprises a terminal connection plate contacting the first electrode terminal by being coupled therewith and a cap connection plate bonded to the cap plate, and a third groove to which the cap connection plate is inserted is formed in the fuse cover.

15. A rechargeable battery according to any preceding claim, wherein a heat insulation member that surrounds the connection fuse portion is provided in the cap connection member.
